(19) **Europäisches Patentamt European Patent Office Office européen des brevets**

(11) **EP 4 234 510 A2**

(12) **EUROPEAN PATENT APPLICATION**

(43) Date of publication:
**30.08.2023   Bulletin 2023/35**

(21) Application number: **23176522.3**

(22) Date of filing: **19.03.2021**

(51) International Patent Classification (IPC):
**C04B 11/028** (2006.01)

(52) Cooperative Patent Classification (CPC):
(C-Sets available)
**C04B 11/0282**                    (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(62) Document number(s) of the earlier application(s) in accordance with Art. 76 EPC:
**21305344.0 / 4 059 904**

(71) Applicant: **SAINT-GOBAIN PLACO**
**92400 Courbevoie (FR)**

(72) Inventors:
• **FRANCY, Olivier**
**92400 Courbevoie (FR)**
• **MAGAUD, Lionel**
**92400 Courbevoie (FR)**
• **COLOMBO, Joël**
**94200 Courbevoie (FR)**
• **TRAN, Binh**
**94200 Courbevoie (FR)**

(74) Representative: **Murgitroyd & Company**
**Murgitroyd House**
**165-169 Scotland Street**
**Glasgow G5 8PL (GB)**

Remarks:
This application was filed on 31-05-2023 as a divisional application to the application mentioned under INID code 62.

(54)   **A PROCESS FOR THE CONTINUOUS PREPARATION OF ALPHA-CALCIUM SULPHATE HEMIHYDRATE**

(57)    The present application describes a process for the continuous production of alpha-calcium sulphate hemihydrate, the process comprising the steps of: providing particulate gypsum; providing water; mixing the particulate gypsum and the water to form a gypsum slurry; and maintaining said gypsum slurry under raised pressure and temperature to convert the particulate gypsum into alpha-calcium sulphate hemihydrate and provide an alpha-calcium sulphate hemihydrate slurry. Additionally, the particulate gypsum comprises a D10 value greater than or equal to 2 $\mu$m, a D90 value smaller than or equal to 90 $\mu$m and a D50 value smaller than or equal to 25 $\mu$m. Particulate gypsum for use in the process is also provided.

Figure 1

EP 4 234 510 A2

**(Cont. next page)**

(52) Cooperative Patent Classification (CPC): (Cont.)

C-Sets
**C04B 11/0282, C04B 11/005**

**Description**

**FIELD OF THE INVENTION**

The present invention relates to a process for the continuous preparation of alpha-calcium sulphate hemihydrate. The present invention further relates to a particulate gypsum for use in the process.

**BACKGROUND TO THE INVENTION**

Gypsum occurs naturally as a raw material in the form of calcium sulphate dihydrate ($CaSO_4$ $2(H_2O)$). Gypsum containing products, such as plasterboard, are prepared by forming a mixture of calcined or dehydrated gypsum, namely calcium sulphate hemihydrate ($CaSO_4$ $0.5(H_2O)$), with water, to form a settable slurry that is then cast into a pre-determined shape. The calcium sulphate hemihydrate reacts with the water and becomes re-hydrated to the dihydrate crystal, which is then cured or dried to the solid state.

The calcium sulphate hemihydrate can be categorised into two basic forms, alpha-calcium sulphate hemihydrate and beta-calcium sulphate hemihydrate. Beta-calcium sulphate hemihydrate is typically formed by heating gypsum under atmospheric conditions. On the other hand, alpha-calcium sulphate hemihydrate is produced from gypsum under conditions of elevated temperature and pressure. Whilst both alpha-calcium sulphate hemihydrate and beta-calcium sulphate hemihydrate can be used to create gypsum products, gypsum products made with alpha-hemihydrate tend to be harder, with greater strength and density.

In commercial industrial environments where gypsum products are continuously produced, it is often desirable or necessary to continuously produce alpha-calcium sulphate hemihydrate. The continuous production of alpha-calcium sulphate hemihydrate can be more difficult than a batch production process, as particles of gypsum introduced to a calcination vessel used in a continuous process will have a distribution of residence times rather than the single residence time of a batch process.

Furthermore, in a continuous process, it is essential that the material in the calcination vessel and the alpha-calcium sulphate hemihydrate produced by the calcination process remain fluid to prevent blockages that may disrupt or halt the continuous production process. The need for fluidity must also be balanced with the requirement for the particles of alpha-calcium sulphate hemihydrate to have the desired shape and size. Finally, there is a necessity to minimise the amount of water used in the process of producing alpha-calcium sulphate hemihydrate to increase overall efficiency and reduce energy consumption.

**SUMMARY OF THE INVENTION**

According to a first aspect of the present invention, there is provided a process for the continuous production of alpha-calcium sulphate hemihydrate, the process comprising the steps of: providing particulate gypsum, providing water, mixing the particulate gypsum and the water to form a gypsum slurry and maintaining the gypsum slurry under raised pressure and temperature to convert the particulate gypsum into alpha-calcium sulphate hemihydrate and provide an alpha-calcium sulphate hemihydrate slurry, characterised in that the particulate gypsum comprises a D10 value greater than or equal to 2 $\mu$m, a D90 value smaller than or equal to 90 $\mu$m and a D50 value smaller than or equal to 25 $\mu$m.

Such a process may have several advantageous features over existing processes of producing alpha-calcium sulphate hemihydrate,
Firstly, given the continuous nature of the production process, limiting the number of particles of gypsum above 90 $\mu$m in diameter ensures that the majority of particles of gypsum will have sufficient time to move into solution within the gypsum slurry during the production process. Additionally, limiting the number of particles of gypsum below 2 $\mu$m in diameter may be advantageous in reducing the water required to ensure sufficient fluidity of the alpha-calcium sulphate hemihydrate slurry during the process.

Small particles of gypsum have a large surface area, and thus a high water demand. Therefore, limiting their presence within the particular gypsum can reduce the water required during the process, increasing its efficiency and reducing the energy required. Also, such fine particles of gypsum frequently grow into unfavourable, elongate crystals of alpha-calcium sulphate hemihydrate during the calcination process. Such elongate crystals may be undesirable both in the production of gypsum products from the alpha-calcium sulphate hemihydrate, and/or in increasing the viscosity of the alpha-calcium sulphate hemihydrate due to their elongate shape.

D50 being smaller than or equal to 25 $\mu$m may be desirable as providing particulate gypsum in this form may help ensure the majority of the particulate gypsum enters solution in the gypsum slurry and is converted to alpha-calcium sulphate hemihydrate within the period of raised temperature and pressure.

As such, the gypsum particle size distribution used in the process of claim 1 may prove advantageous.

Preferably, the particulate gypsum comprises a D10 value greater than or equal to 2.5 $\mu$m. More preferably,

the particulate gypsum comprises a D10 value greater than or equal to 3 $\mu$m.

Preferably, the particulate gypsum comprises a D90 value smaller than or equal to 80 $\mu$m. More preferably, the particulate gypsum comprises a D90 value smaller than or equal to 70 $\mu$m.

Preferably, the particle size distribution satisfies the following relationship:

$$0.4 \leq (D90/D50)/(D50/D10) \leq 1.5$$

Preferably, where d is a particle's diameter, between 0.5d > D10 and 2d < D90, for each particle size d, the particle size distribution complies with the following criterion:

$$1.25 > q(0.5d,d) / q(d,2d) > 0.75$$

where q(d1,d2) is the mass fraction of particle comprised between d1 and d2

Preferably, the particulate gypsum comprises a D50 value smaller than or equal to 20 $\mu$m. Yet more preferably, the particulate gypsum comprises a D50 value smaller than or equal to 18 $\mu$m. Still more preferably, the particulate gypsum comprises a D50 value smaller than or equal to 15 $\mu$m. Preferably, the particulate gypsum comprises a D50 value greater than or equal to 8 $\mu$m. More preferably, the particulate gypsum comprises a D50 value greater than or equal to 10 $\mu$m.

As such, the D50 value of the particulate gypsum may preferably lie in any of the following ranges: 8 $\mu$m $\leq$ D50 $\leq$ 25 $\mu$m, 8 $\mu$m $\leq$ D50 $\leq$ 20 $\mu$m, 8 $\mu$m $\leq$ D50 $\leq$ 18 $\mu$m, 8 $\mu$m $\leq$ D50 $\leq$ 15 $\mu$m, 10 $\mu$m $\leq$ D50 $\leq$ 25 $\mu$m, 10 $\mu$m $\leq$ D50 $\leq$ 20 $\mu$m, 10 $\mu$m $\leq$ D50 $\leq$ 18 $\mu$m, 10 $\mu$m $\leq$ D50 $\leq$ 15 $\mu$m.

Preferably, the raised temperature is in the range 110°C to 170°C inclusive. More preferably the raised temperature is in the range 120°C to 160°C inclusive. Still more preferably, the raised temperature is in the range 125°C to 150°C inclusive.

Preferably, the raised pressure is in the range 0.15 MPa to 0.80 MPa inclusive. More preferably, the raised pressure is in the range 0.25 MPa to 0.50 MPa inclusive.

Preferably, a gypsum particle within the gypsum slurry is maintained under conditions of raised temperature and pressure for a mean residence time within the range 10 minutes to 120 minutes inclusive. More preferably, a gypsum particle within the gypsum slurry is maintained under conditions of raised temperature and pressure for a mean residence time within the range 30 minutes to 90 minutes inclusive. Still more preferably, a gypsum particle within the gypsum slurry is maintained under conditions of raised temperature and pressure for a mean residence time within the range 45 minutes to 90 minutes inclusive. Still more preferably, a gypsum particle within the gypsum slurry is maintained under conditions of raised temperature and pressure for a mean residence time for around 45 minutes. It may be preferable for the residence time to lie within any of these ranges to ensure that there is sufficient time of the particles of gypsum to be calcined to form alpha-calcium sulphate hemihydrate. Where the conditions of raised temperature include a temperature of 150 °C or higher, the residence time may be in the range 10 minutes to 30 minutes inclusive.

Preferably, the gypsum slurry comprises a water to gypsum ratio of between 0.4 and 1.5 by weight inclusive. More preferably, the gypsum slurry comprises a water to gypsum ratio of between 0.4 and 1.3 by weight inclusive. Still more preferably, the gypsum slurry comprises a water to gypsum ratio of between 0.7 and 1.2 by weight inclusive. Still more preferably, the gypsum slurry comprises a water to gypsum ratio of between 0.7 and 1.0 by weight inclusive.

Preferably, the process comprises incorporating a habit modifier into the gypsum slurry. The incorporation of a habit modifier in the gypsum slurry may assist in controlling the shape and form of the alpha-calcium sulphate hemihydrate crystals produced by the continuous process.

Preferably, the habit modifier is incorporated into the gypsum slurry in an amount of between 0.1 wt.% and 0.15 wt.% relative to the weight of the gypsum. Preferably, the habit modifier is succinic acid.

Preferably, the gypsum slurry comprises a Brookfield viscosity in the range of 15 to 0.5 cP inclusive at 80°C. More preferably, the alpha-calcium sulphate hemihydrate slurry comprises a Brookfield viscosity in the range of 10 to 1 cP inclusive at 80°C. Still more preferably, the alpha-calcium sulphate hemihydrate slurry comprises a Brookfield viscosity in the range of 8 to 1 cP inclusive at 80°C. Yet more preferably, the alpha-calcium sulphate hemihydrate slurry comprises a Brookfield viscosity in the range of 7 to 2 cP inclusive at 80°C. It may be advantageous for the Brookfield viscosity of the alpha-calcium sulphate hemihydrate slurry to lie within any one or these ranges to ensure that it can freely flow during the process. Ensuring the gypsum slurry has a Brookfield viscosity in the ranges described above results in the output of an alpha-calcium sulphate hemihydrate slurry with a suitable behaviour in terms of flow, sedimentation and viscosity. The output slurry's Brookfield viscosity will be lower than the Brookfield viscosity of the gypsum slurry due to the effect of the calcination process.

Preferably, the process comprises the further step of grinding the particulate gypsum to reduce the size of particles therein. More preferably, the grinding step occurs prior to the step of mixing the particulate gypsum and the water. Grinding the particulate gypsum may be preferable as it may increase the solubility of the gypsum particles in the water.

Preferably, after the grinding step, the process comprises filtering the particulate gypsum. Such a step may advantageous remove gypsum particles of undesirable sizes from the particulate gypsum.

Preferably, the step of providing particulate gypsum comprises substantially continuously providing particulate gypsum. It may be advantageous to continuously provide particulate gypsum as this may allow for a consistent output in the volume and or quality of the alpha-calcium sulphate hemihydrate slurry. More preferably, particulate gypsum is provided at a substantially constant mass per second.

Preferably, the step of providing water comprises substantially continuously providing water. It may be advantageous to continuously provide water as this may allow for a consistent output in the volume and or quality of the alpha-calcium sulphate hemihydrate slurry. More preferably, water is provided at a substantially constant flow rate. Preferably, water is provided at a substantially constant temperature. Most preferably, water is provided at a substantially constant flow rate and substantially constant temperature.

Preferably, the step of maintaining the gypsum slurry under raised pressure and temperature to convert the particulate gypsum into alpha-calcium sulphate hemihydrate and provide an alpha-calcium sulphate hemihydrate slurry comprises holding the gypsum slurry within a calcination vessel.

Preferably, the process comprises removing water from the alpha-calcium sulphate hemihydrate slurry. Preferably, removing the water comprises heating the alpha-calcium sulphate hemihydrate slurry. Preferably, removing the water comprises filtering the alpha-calcium sulphate hemihydrate slurry. Preferably, removing the water comprises separating the water from the alpha-calcium sulphate hemihydrate with a hydrocyclone. It may be preferable to remove water from the alpha-calcium sulphate hemihydrate slurry as this may reduce the amount of water that must be removed from the slurry during the production of a gypsum product such as a plasterboard.

Preferably, the step of providing water comprises mixing the water removed from the alpha-calcium sulphate hemihydrate slurry with additional water. In this way, the energy used in the process may be reduced as water removed from the alpha-calcium sulphate hemihydrate slurry may not need to be heated, or may require reduced heating, before it is mixed with the particulate gypsum or during the calcination process.

Preferably, the particulate gypsum comprises desulphogypsum. Preferably, the particulate gypsum comprises recycled gypsum.

Preferably, the alpha-calcium sulphate hemihydrate slurry comprises particles of alpha-calcium sulphate hemihydrate with an aspect ratio of 0.8 and 1.2 inclusive. More preferably, the alpha-calcium sulphate hemihydrate slurry comprises particles of alpha-calcium sulphate hemihydrate with an aspect ratio of 0.9 and 1.0 inclusive. Typically, the aspect ratio of the alpha-calcium sulphate hemihydrate would be undertaken via scanning electron microscope image analysis.

Preferably, the alpha-calcium sulphate hemihydrate slurry comprises particles of alpha-calcium sulphate hemihydrate wherein 8 wt.% to 22 wt.% inclusive of the particles within the alpha-calcium sulphate hemihydrate pass through 10 $\mu$m. More preferably, the alpha-calcium sulphate hemihydrate slurry comprises particles of alpha-calcium sulphate hemihydrate wherein 12 wt.% to 16 wt.% inclusive of the particles within the alpha-calcium sulphate hemihydrate pass through 10 $\mu$m. Such measurements may be undertaken using a laser granulometer.

According to a second aspect of the present invention, there is provided particulate gypsum for use in the process as hereinbefore described, the particulate gypsum comprising a D10 value greater than or equal to 2 $\mu$m, a D90 value smaller than or equal to 90 $\mu$m and a D50 value smaller than or equal to 25 $\mu$m.

In this way, a particulate gypsum for use in a continuous calcination process with the hereinbefore described advantages is provided.

Preferably, the particulate gypsum of the second aspect of the invention may have any or all of the features described in relation to the first aspect of the invention alone or in combination.

## DETAILED DESCRIPTION

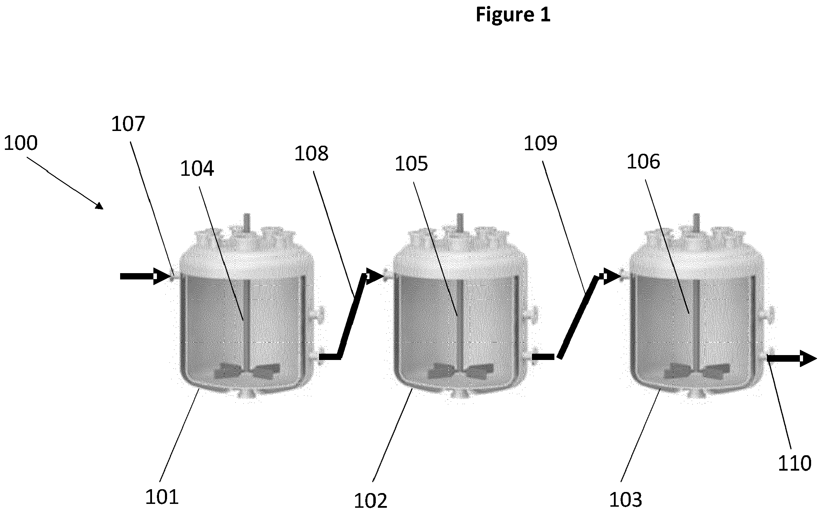

Embodiments of the present invention will now be described by way of example only and with reference to Figure 1 that depicts a schematic apparatus for the continuous production of alpha-calcium sulphate hemihydrate. Such an apparatus is known in the prior art.

As can be seen in Figure 1, the apparatus 100 comprises three calcination vessels 101, 102, 103 in series for the continuous production of alpha-calcium sulphate hemihydrate. Each of the calcination vessels includes a mixing arm 104, 105, 106, configured to mix the content of the calcination vessel 101, 102, 103.

As illustrated in Figure 1, in this apparatus 100 each mixing member 104, 105, 106, extends downwardly within the interior of the calcination vessel 101, 102, 103, from the top of the calcination vessel 101, 102, 103 to a position adjacent the bottom of the interior of the calcination vessel 101, 102, 103. In this way, the mixing members 104, 105, 106 effectively mix the content of the calcination vessels 101, 102 103 even when they are partially filled. Each mixing member 104, 105, 106 comprises a plurality of mixing paddles located close to the base of the calcination vessel 101, 102, 103 to improve mixing.

During the calcination process, pre-heated gypsum slurry is fed into the first calcination vessel 101 through an aperture 107. The aperture 107 is located towards the top of the first calcination vessel 101. As the first calcination vessel 101 is fluidly connected to the second calcination vessel 102 by a first pipe 108, the slurry can travel freely from the first calcination vessel 101 to the second calcination vessel 102. The first pipe 108 extends from a position towards the base of the first calcination vessel 101 to a position towards the top of the second calcination vessel 102.

The second calcination vessel 102 is fluidly connected to the third calcination vessel 103 by a second pipe 109. The second pipe 109 extends from a position towards the base of the second calcination vessel 102 to a position towards the top of the third calcination vessel 103. As such, the slurry can travel freely from the second calcination vessel 102 to the third calcination vessel. As gypsum slurry is continually introduced into the first calcination vessel 101, and pumped between the calcination vessels 101, 102, 103, there is a continuous passage of slurry from the first calcination vessel 101 to the third calcination vessel 103, via the second calcination vessel 102.

The slurry exits the third calcination vessel via an outlet 110. The outlet 110 is located towards the base of the third calcination vessel 103. The positioning of the aperture 107, the first pipe 108, the second pipe 109 and the outlet 110 ensures the slurry has to travel through all areas of the apparatus 100, and the residence time of the slurry within the apparatus 100 can be controlled.

Due to the calcination process undertaken during the passage of the slurry through the calcination vessels 101, 102, 103, the slurry exits the third calcination vessel as an alpha-calcium sulphate hemihydrate slurry. The calcination process occurs as the calcination vessels 101, 102, 103 are maintained at an elevated temperature and pressure.

Whilst the apparatus 100 of Figure 1 comprises three calcination vessels 101, 102, 103, the number and size of the calcination vessels 101, 102, 103 may be varied. This variation ensures the total volume of the calcination vessels 101, 102, 103 is sufficient that the introduced gypsum slurry has a mean residence time that allows for an acceptable conversion of the gypsum slurry into alpha-calcium sulphate hemihydrate slurry. The length of time required for this conversion process varies on the temperature and pressure experienced by the slurry within the calcination vessels 101, 102, 103 during the calcination process.

To ensure sufficient and efficient conversion of the gypsum into alpha-calcium sulphate hemihydrate during the calcination process, the applicant considers the mean residence time of a particle within the apparatus should be in the range 10 to 120 minutes inclusive. Additionally, the applicant considers the temperature of the calcination vessels should be in the range 110°C to 170°C inclusive. Finally, the applicant considers the raised pressure should be in the range 0.15 to 0.80 MPa inclusive. Each of the residence time, temperature and pressure are can be varied independently to ensure efficient conversion of the gypsum into alpha-calcium sulphate hemihydrate. The output of the apparatus 100 can be monitored and tested to ensure the continuous calcination process is proceeding as desired. If necessary, the temperature and/or pressure in each calcination vessel may differ to ensure the overall calcination process within the apparatus 100 proceeds as required. Additionally, the volume of each calcination vessel may be controlled independently.

In a continuous calcination process, it is essential that the material in the calcination vessel and the alpha-calcium sulphate hemihydrate produced by the calcination process remain fluid to prevent blockages that may disrupt or halt the continuous production process. The need for fluidity must be balanced with the requirement for the particles of alpha-calcium sulphate hemihydrate to have the desired shape and size for use in further commercial processes. Finally, there is a necessity to minimise the amount of water used in the process of producing alpha-calcium sulphate hemihydrate to increase overall efficiency and reduce energy consumption.

To determine the suitability of various gypsum slurries for use in a continuous calcination process, gypsum slurries with the following gypsum particle size distributions were prepared as outlined in Table 1.

TABLE 1

| Slurry | D10 ($\mu$m) | D50 ($\mu$m) | D90 ($\mu$m) |
|---|---|---|---|
| Example 1 | 3.0 | 11.0 | 32.0 |
| Example 2 | 3.0 | 11.0 | 30.0 |
| Example 3 | 3.1 | 12.0 | 39.0 |
| Example 4 | 3.7 | 17.0 | 46.6 |
| Example 5 | 3.2 | 13.1 | 41.9 |
| Example 6 | 3.2 | 13.6 | 77.9 |
| Example 7 | 2.6 | 14.0 | 38.2 |

(continued)

| Slurry | D10 (μm) | D50 (μm) | D90 (μm) |
|---|---|---|---|
| Comparative Example 1 | 18.9 | 41.0 | 68.8 |
| Comparative Example 2 | 4.3 | 31.0 | 118.9 |
| Comparative Example 3 | 5.1 | 51.5 | 300.0 |
| Comparative Example 4 | 1.8 | 11.4 | 72.0 |
| Comparative Example 5 | 0.6 | 1.5 | 3.1 |

D10, D50 and D90 were measured using a Horiba LA-950 laser diffractometer. All particle size measurements were carried out in isopropanol with a thirty second ultrasonic pre-dispersion step.

The suitability of these gypsum slurries for use in a continuous calcination process for the production of alpha-calcium sulphate hemihydrate was determined by comparing these slurries to the criteria listed below.

Conversion Rate

For a gypsum slurry to be used in a continuous calcination process for the production of alpha-calcium sulphate hemihydrate, the gypsum particles within the slurry must convert into alpha-calcium sulphate hemihydrate relatively rapidly. An acceptably rapid conversion rate was determined to be a 95 wt.% conversion (T95) of the gypsum particles into alpha-calcium sulphate hemihydrate in 25 minutes or less, where calcination was undertaken at a temperature of 150°C and a pressure of 0.5 MPa. Conversion rate measurements were performed in a batch reactor to allow for precise control of particle residence time and an accurate determination of T95.

Fluidity

In a continuous process, the slurry must have an acceptable fluidity throughout the calcination. Suitable fluidity occurs when viscosity is low enough to obtain an optimal wall exchange thermal coefficient in the calcination vessels, viscosity is low enough to limit the risk of blockages and/or pressure drops within the calcination apparatus, and viscosity is high enough to minimise settling and/or sedimentation of the slurry. A suitable viscosity for the gypsum slurry was determined to be achieved when the Brookfield viscosity measured at 80°C was in the range 0.5 to 15 cP inclusive. When measuring the viscosity of the gypsum slurry, the gypsum particles were mixed with water at a ratio of 1:1 by weight.

During these experiments, the Brookfield viscosity of the gypsum slurry was measured using a Brookfield dial reading viscometer using an RV/HA/HB-2 spindle.

Output Alpha-Calcium Sulphate Hemihydrate Quality

The output alpha-calcium sulphate hemihydrate must include particles with the correct aspect ratio for optimal water demand during future plasterboard manufacture, and sufficient fine particles to ensure any future plasterboards set with the required speed during manufacture. A suitable aspect ratio was determined to be between 0.8 and 1.2 inclusive, and a sufficient level of fine particles was determined to be between 8 wt.% and 22wt.% inclusive of particles within the output alpha-calcium sulphate hemihydrate passing through 10 μm.

Here, the aspect ratio of the alpha-calcium sulphate hemihydrate was determined by scanning electron microscopy image analysis, and the level of fine particles was measure with a laser granulometer. The output alpha-calcium sulphate hemihydrate was characterised after the input slurries were calcined at a temperature of 150°C and a pressure of 0.5 MPa for a period of 45 minutes in a batch reactor.

Each of the gypsum slurries in Table 1 was tested against the above mentioned criteria, with the results summarised in Table 2.

TABLE 2

| Slurry | T95 (minutes) | Gypsum Slurry Viscosity (cP) | Aspect Ratio | wt.% < 10 μm |
|---|---|---|---|---|
| Example 1 | 24 | 3.7 | 1.2 | 13.0 |
| Example 2 | 23 | 3.7 | 1.1 | 12.4 |
| Example 3 | 19 | 3.6 | 1.1 | 12.1 |

(continued)

| Slurry | T95 (minutes) | Gypsum Slurry Viscosity (cP) | Aspect Ratio | wt.% < 10 $\mu$m |
|---|---|---|---|---|
| Example 4 | 24 | 3.9 | 1.2 | 13.5 |
| Example 5 | 20 | 1.1 | 1.2 | 13.0 |
| Example 6 | 25 | 0.5 | 1.2 | 11.0 |
| Example 7 | 14 | 3.7 | 1.2 | 20.3 |
| Comparative Example 1 | 22 | 2.4 | 1.6 | 6.0 |
| Comparative Example 2 | 34 | 2.0 | 1.1 | 11.9 |
| Comparative Example 3 | 31 | 2.4 | 1.4 | 5.9 |
| Comparative Example 4 | 27 | 3.2 | 0.8 | 21.7 |
| Comparative Example 5 | 11 | 16.0 | 0.8 | 36.0 |

As can be seen from Table 2 and Table 1 in combination, gypsum particle size distributions with a D10 value greater than or equal to 2 $\mu$m, a D90 value smaller than or equal to 90 $\mu$m and a D50 value smaller than or equal to 25 $\mu$m satisfied the four criteria for use in a continuous calcination process summarised in Table 2. As such, gypsum slurries with these particle size distributions are suitable for use in a continuous calcination process as described in relation to Figure 1.

Where the particle size distribution of the gypsum particles lies outside that specified above, there was a failure to meet at least one of the criteria for the use of the slurry in a continuous process. As such, providing a gypsum slurry with a particle size distribution with a D10 value greater than or equal to 2 $\mu$m, a D90 value smaller than or equal to 90 $\mu$m and a D50 value smaller than or equal to 25 $\mu$m allows the efficient and commercial use of a continuous process for the manufacture of alpha-calcium sulphate hemihydrate.

To confirm the applicability of the trials discussed above to continuous calcination processes, further testing was undertaken. In this further testing, gypsum slurries were selected and calcined in an experimental continuous calcination apparatus similar to that illustrated in Figure 1. The experimental continuous calcination apparatus used in these further tests included two calcination vessels in series, the two calcination vessels fluidly connected to one another in a similar fashion as in the apparatus depicted in Figure 1.

These further experiments are summarised in the table below.

TABLE 3

| Slurry | Calcination Temperature (°C) | Calcination Pressure (MPa) | Average Particle Residence Time (minutes) | Conversion (wt. %) |
|---|---|---|---|---|
| Example 2 | 150 | 0.5 | 30 to 35 | 96.5 |
| Example 2 | 140 | 0.5 | 30 to 35 | 96.5 |
| Example 3 | 150 | 0.5 | 30 to 35 | 97.0 |
| Example 4 | 150 | 0.5 | 30 to 35 | 97.5 |
| Example 4 | 140 | 0.5 | 30 to 35 | 96.0 |
| Comparative Example 1 | 150 | 0.5 | 30 to 35 | 89.5 |

Here, the measured conversion is of the gypsum particles within the input slurries into alpha-calcium sulphate hemihydrate in the output slurries.

For each of the experiments involving the slurries of Example 2, Example 3 and Example 4, the measured conversion rates were above 95 wt.%. However, the conversion rate measured for the experiment using the slurry of Comparative Example 1 was a relatively poor 89.5 wt.%.

Additionally, the slurries of Example 2, Example 3 and Example 4 were observed to retain an acceptable fluidity throughout the continuous calcination process. Finally, the output alpha-calcium sulphate hemihydrate slurries produced by the experiments using the slurries of Example 2, Example 3 and Example 4 were suitable for the production of plasterboards using standard commercial processes. As such, each of the slurries of Example 2, Example 3 and Example 4 were again determined to be suitable for use in a continuous calcination process. On the other hand, the low conversion percentage observed with the slurry of Comparative Example 4 rendered this slurry unsuitable for use in a continuous calcination process.

**Claims**

1. A process for the continuous production of alpha-calcium sulphate hemihydrate, the process comprising the steps of:

   providing particulate gypsum;
   providing water;
   mixing said particulate gypsum and said water to form a gypsum slurry; and
   maintaining said gypsum slurry under raised pressure and temperature to convert said particulate gypsum into alpha-calcium sulphate hemihydrate and provide an alpha-calcium sulphate hemihydrate slurry;
   **characterised in that**
   said particulate gypsum comprises a D10 value greater than or equal to 2 $\mu$m, a D90 value smaller than or equal to 90 $\mu$m and a D50 value smaller than or equal to 25 $\mu$m.

2. The process of claim 1, wherein said particulate gypsum comprises a D50 value smaller than or equal to 20 $\mu$m.

3. The process of claim 2, wherein said particulate gypsum comprises a D50 value smaller than or equal to 15 $\mu$m.

4. The process of any one preceding claim, wherein said raised temperature is in the range 110°C to 170°C inclusive.

5. The process of any one preceding claim, wherein said raised pressure is in the range 0.15 MPa to 0.80 MPa inclusive.

6. The process of any one preceding claim, wherein a gypsum particle within said gypsum slurry is maintained under conditions of raised temperature and pressure for a mean residence time within the range 10 minutes to 120 minutes inclusive.

7. The process of any one preceding claim, wherein said gypsum slurry comprises a water to gypsum ratio of between 0.4 and 1.5 by weight inclusive.

8. The process of any one preceding claim, wherein said gypsum slurry comprises a Brookfield viscosity in the range of 15 to 0.5 cP inclusive at 80°C.

9. The process of any one preceding claim, wherein the process comprises the further step of grinding said particulate gypsum to reduce the size of particles therein.

10. The process of any one preceding claim, wherein the step of providing particulate gypsum comprises substantially continuously providing particulate gypsum.

11. The process of any one preceding claim, wherein the step of providing water comprises substantially continuously providing water.

12. The process of any one preceding claim, wherein the step of maintaining said gypsum slurry under raised pressure and temperature to convert said particulate gypsum into alpha-calcium sulphate hemihydrate and provide an alpha-calcium sulphate hemihydrate slurry comprises holding said gypsum slurry within a calcination vessel.

13. The process of any one preceding claims, where said process comprises removing water from said alpha-calcium sulphate hemihydrate slurry.

14. The process of claim 13, wherein the step of providing water comprises mixing the water removed from the alpha-calcium sulphate hemihydrate slurry with additional water.

15. Particulate gypsum for use in the process of any one proceeding claim,
    said particulate gypsum comprising a D10 value greater than or equal to 2 $\mu$m, a D90 value smaller than or equal to 90 $\mu$m and a D50 value smaller than or equal to 25 $\mu$m.

**Figure 1**